# EUROPÄISCHE PATENTSCHRIFT

(11) **EP 3 406 953 B1**
(45) Veröffentlichungstag und Bekanntmachung des Hinweises auf die Patenterteilung: **30.10.2019**
(21) Anmeldenummer: 18000465.7
(22) Anmeldetag: 17.05.2018
(51) Int. Cl.: F16L 5/02, F16L 5/14, F16L 27/08

(54) **WANDDURCHFÜHRUNG FÜR ZWEI ROHRLEITUNGEN**
WALL FEED-THROUGH FOR TWO CONDUITS
TRAVERSÉE MURALE POUR DEUX CONDUITES

(30) Priorität: 23.05.2017 DE 102017004956
(43) Veröffentlichungstag der Anmeldung: 28.11.2018
(73) Patentinhaber: Atec Pharmatechnik Gmbh, 24966 Sörup (DE)
(72) Erfinder: Mumm, Hans-Werner, 24966 Sörup (DE)
(74) Vertreter: Thomas, Götz

(56) Entgegenhaltungen:
- EP-A1- 1 449 543
- EP-A1- 2 823 828
- DE-A1- 2 403 869
- DE-A1-102007 063 408
- US-A- 4 893 845

## Beschreibung

Die Erfindung betrifft eine Wanddurchführung für zwei Rohrleitungen, mit einem um eine Drehachse drehbar in einer Wand gelagerten Körper, durch den sich zwei nebeneinander angeordnete und zusammen mit dem Körper drehbare Abschnitte der beiden Rohrleitungen erstrecken, die jeweils mit einem stationären Abschnitt von einer der beiden Rohrleitungen kommunizieren.

Vorrichtungen zur Reinigung und Sterilisation von kleinen Gegenständen, wie Verschlüssen von Infusionsflaschen oder Vials für pharmazeutische Zwecke, Spritzen oder Spritzenkolben, wie sie zum Beispiel in der EP 1 169 067 B1, EP 1 449 543 B1 oder EP 2 823 828 A1 offenbart sind, umfassen häufig zwei innerhalb und außerhalb eines Reinraums gelegene, durch eine Wand getrennte Teile. Die beiden Teile sind durch zwei Leitungen zum Umwälzen von sterilen Behandlungsmedien miteinander verbunden. Die beiden Leitungen weisen zwei nebeneinander durch die Wand hindurch verlaufende Abschnitte auf, die um eine gemeinsame Drehachse drehbar oder schwenkbar sein müssen, wenn der zur Reinigung und Sterilisation der Gegenstände dienende Behälter während der Reinigung gedreht oder geschwenkt werden soll. Zu diesem Zweck umfassen die Vorrichtungen eine Wanddurchführung der eingangs genannten Art, wie sie z.B. in Fig. 6 und 7 der EP 2 823 828 A1 dargestellt ist. Die drehbaren Abschnitte sind dort außerhalb des Reinraums durch flexible Leitungsabschnitte in Form von Schlauchleitungen mit den stationären Abschnitten verbunden, wie dies z.B. in der EP 1 449 543 B1 dargestellt und beschrieben ist. Die Schlauchleitungsabschnitte benötigen jedoch erstens relativ viel Platz, kosten zweitens mehr als starre Rohrleitungsabschnitte und besitzen drittens eine geringere Lebensdauer.

Ausgehend hiervon liegt der Erfindung die Aufgabe zugrunde, eine Wanddurchführung der eingangs genannten Art dahingehend zu verbessern, dass auf biegsame Leitungsabschnitte verzichtet werden kann.

Diese Aufgabe wird erfindungsgemäß dadurch gelöst, dass jeder der drehbaren Abschnitte der beiden Rohrleitungen durch ein Drehgelenk mit einem stationären Abschnitt von einer der beiden Rohrleitungen verbunden ist und dass die Drehachsen der beiden Drehgelenke miteinander und mit der Drehachse des Körpers fluchten. Durch die Fluchtung der Drehachsen können sich bei Dreh- oder Schwenkbewegungen des Körpers die zusammen mit dem Körper mitgedrehten Abschnitte der beiden Rohrleitungen jeweils im zugehörigen Drehgelenk in Bezug zum zugehörigen stationären Abschnitt jeder Rohrleitung drehen. Dadurch kann auf flexible Schlauchleitungsabschnitte zwischen den zusammen mit dem Körper mitgedrehten Abschnitten der beiden Rohrleitungen und den stationären Abschnitten der beiden Rohrleitungen verzichtet werden.

Um es zu ermöglichen, dass die Drehachsen der beiden Drehgelenke miteinander und mit der Drehachse des Körpers fluchten, sind die beiden Drehgelenke und der Körper gemäß einer bevorzugte Ausgestaltung der Erfindung im Abstand hintereinander entlang der miteinander fluchtenden Drehachsen angeordnet, so dass die letzteren in einer geraden Linie zuerst durch den Körper, dann durch das eine der beiden Drehgelenke und zuletzt durch das andere der beiden Drehgelenke verlaufen. Die beiden Drehgelenke weisen in Richtung der fluchtenden Drehachsen unterschiedliche Abstände von dem Körper auf.

Eine weitere vorteilhafte Ausgestaltung der Erfindung sieht vor, dass die drehbaren Abschnitte der beiden Rohrleitungen parallel zueinander und zur Drehachse des Körpers sowie in gleichen seitlichen Abständen von dieser durch den Körper hindurch verlaufen bzw. aus dem Körper austreten und nach ihrem Austritt aus dem Körper in unterschiedlichen Entfernungen von dem Körper zur Drehachse hin abgelenkt sind. Entsprechendes gilt auch für die stationären Abschnitte der Rohrleitungen, die jenseits der Drehgelenke in unterschiedlichen Entfernungen von dem Körper von der Drehachse weg abgelenkt sind.

Dadurch sind der drehbare Abschnitt, das Drehgelenk und der stationäre Abschnitt von jeder der beiden Rohrleitungen in einer Draufsicht oder Seitenansicht von entgegengesetzten Seiten her U- oder V-förmig zur Drehachse hin ausgelenkt, wobei das Drehgelenk jeweils am Scheitel des U oder V angeordnet ist.

Alternativ kann jedoch auch vorgesehen werden, die stationären Abschnitte der beiden Rohrleitungen unmittelbar hinter dem jeweiligen Drehgelenk, d.h. auf der vom Körper abgewandten Seite des jeweiligen Drehgelenkes nach unten abzulenken, so dass beim Entleeren der Rohrleitungen, zum Beispiel bei einem Wechsel des Behandlungsfluids, das letztere besser nach unten aus den stationären Rohrleitungsabschnitten abfließen bzw. abtropfen kann.

Die beiden Drehgelenke umfassen jeweils ein stationäres Gelenkteil und ein drehbares Gelenkteil, wobei die beiden drehbaren Gelenkteile durch die drehbaren Abschnitt der Rohrleitung starr mit dem drehbaren Körper verbunden sind und wobei die stationären Gelenkteile durch Stützen gegenüber einem Boden oder einer Wand abgestützt sind. Die beiden Gelenkteile jedes Drehgelenks besitzen gegenüberliegende Stirnflächen, die senkrecht zu den fluchtenden Drehachsen ausgerichtet sind.

Um im Bereich der Wanddurchführung eine Kontamination des Reinraums sicher zu verhindern, ist der drehbare Körper in Bezug zur Wand abgedichtet und durch ein gekapseltes Lager drehbar gelagert, so dass durch das Lager hindurch keine Kontamination des Reinraums möglich ist.

Bei den in der Wanddurchführung verwendeten Drehgelenken handelt es bevorzugt um Drehgelenke mit zwei in Bezug zueinander drehbaren Gelenkteilen, einer in einem Ringspalt zwischen den beiden Gelenkteilen angeordneten, gegen die beiden Gelenkteile anliegenden und im Kontakt mit dem Fluid befindlichen Dichtung, sowie einem zwischen den beiden Gelenkteilen angeordneten, zur Drehachse koaxialen Drehlager.

Vorzugsweise ist zwischen der Dichtung und dem Drehlager ein zur Umgebung hin offener Raum angeordnet, durch den eventuell aus dem Drehlager entweichendes Schmiermittel in die Umgebung austreten und auf diese Weise am Vordringen zur Dichtung gehindert werden kann.

Vorteilhaft ist der zur Umgebung hin offene Raum zwischen dem Drehlager und dem Ringspalt angeordnet, besitzt größere Querschnittsabmessungen als der Ringspalt und grenzt direkt an das Drehlager an, so dass das eventuell aus dem Drehlager entweichende Schmiermittel nicht bis zu dem Ringspalt vordringen kann, in dem die Dichtung angeordnet ist.

Gemäß einer weiteren bevorzugten Ausgestaltung der Erfindung ist die Drehachse des Drehgelenks horizontal ausgerichtet, wobei der zur Umgebung hin offene Raum nach unten zu offen ist, so dass flüssiges Schmiermittel durch seine Schwerkraft nach unten aus dem Raum heraustropfen kann. Dies hat den weiteren Vorteil, dass eventuelle Leckagen des geschmierten Drehlagers sehr schnell und einfach erkannt werden können, indem man die Unterseite des Drehlagers oder den Boden unter dem Drehlager visuell auf das Vorhandensein eventueller Schmiermitteltropfen überprüft.

Um einen Austritt von Fluid an der im Kontakt mit dem Fluid befindlichen Dichtung vorbei aus dem Fluidkanal sicher zu verhindern, wird diese Dichtung bevorzugt radial gegen die beiden Gelenkteile angepresst. Zu diesem Zweck ist bevorzugt auf der vom Fluid abgewandten Seite der Dichtung eine zweite Dichtung im Ringspalt angeordnet, die radial von außen her mit Druckluft beaufschlagt werden kann, um sie nach innen gegen die im Kontakt mit dem Fluid befindliche Dichtung und diese dadurch gegen benachbarte Begrenzungswände des Ringspalts anzupressen. Die Zufuhr der Druckluft erfolgt durch einen Druckluftkanal, dessen äußeres Ende mit einer Druckluftquelle verbunden oder verbindbar ist, der sich zweckmäßig durch eines der beiden Gelenkteile hindurch erstreckt, und dessen inneres Ende auf der von der ersten Dichtung abgewandten Seite der zweiten Dichtung in den Ringspalt mündet.

Um zu verhindern, dass die zu diesem Zweck in den Ringspalt zugeführte Druckluft aus dem Ringspalt in den zur Umgebung hin offenen Raum entweichen kann, ist zwischen der Mündung des Druckluftkanals in den Ringspalt und der Mündung des Ringspalts in den zur Umgebung hin offenen Raum eine weitere Dichtung im Ringspalt angeordnet. Diese weitere Dichtung ist zweckmäßig in eine Nut in einer Stirnfläche von einem der beiden Gelenkteile eingesetzt und liegt gegen eine gegenüberliegende Stirnfläche des anderen Gelenkteils an.

Vorteilhaft mündet im Zwischenraum zwischen der im Kontakt mit dem Fluid befindlichen Dichtung und der zweiten Dichtung ein Druckentlastungskanal in den Ringspalt, der den Zwischenraum mit der Umgebung verbindet. Mit dem Druckentlastungskanal kann eventuell an der zweiten Dichtung vorbeitretende Druckluft aus dem Zwischenraum in die Umgebung abgeleitet werde. Dadurch kann sich zwischen den beiden Dichtungen kein Druck aufbauen und infolgedessen keine nicht-sterile Druckluft an der ersten Dichtung vorbei in den Kanal mit dem sterilen Fluid gelangen.

Um es zu ermöglichen, als Drehlager ein handelsübliches Drehlager und vorzugsweise ein geschmiertes Wälzlager, zum Beispiel ein Rillenkugellager zu verwenden, ist bevorzugt an einem der beiden Gelenkteile eine Muffe angebracht, die das andere Gelenkteil in axialer Richtung übergreift, so dass sich ein Außenring des Drehlagers von innen her gegen die Muffe und ein Innenring des Drehlagers von außen her gegen den äußeren Umfang des anderen Gelenkteils abstützen kann. In diesem Fall ist der zur Umgebung hin offene Raum zweckmäßig zwischen der Muffe und dem äußeren Umfang des anderen Gelenkteils angeordnet und kommuniziert durch mindestens eine Öffnung in der Muffe mit der Umgebung. Bei der mindestens einen Öffnung kann es sich zum Beispiel um eine schlitzförmige Öffnung handeln, die in axialer Richtung ausgerichtet ist und zweckmäßig nach unten weist.

Eine weitere vorteilhafte Ausgestaltung der Erfindung sieht vor, dass der Ringspalt zwischen den beiden Gelenkteilen zwischen zwei gegenüberliegenden Stirnflächen und der zur Umgebung hin offene Raum zwischen zwei gegenüberliegenden Umfangsflächen angeordnet ist, wobei der Ringspalt an den Fluidkanal angrenzt, während der zur Umgebung hin offene Raum an das Drehlager angrenzt, das den Raum zweckmäßig an oder in der Nähe seines vom Ringspalt abgewandten Endes begrenzt. Auf diese Weise können der Ringspalt und das Drehlager in einem größeren räumlichen Abstand voneinander angeordnet werden, was eine bessere Trennung der Dichtfunktion und die Lagerfunktion ermöglicht.

Die Anlageflächen an den gegenüberliegenden Stirnflächen der beiden Gelenkteile, gegen welche die im Kontakt mit dem Fluid befindliche erste Dichtung von der zweiten Dichtung angepresst wird, sind vorteilhafterweise keine ebenen Flächen, sondern besitzen eine an die Form der erste Dichtung angepasste Form. Dadurch wird zum einen die Anlagefläche der ersten Dichtung an den beiden Gelenkteilen vergrößert und damit ein Austritt von Fluid aus dem Fluidkanal noch wirkungsvoller verhindert. Zum anderen wird auch verhindert, dass die zweite Dichtung die erste Dichtung teilweise in den Fluidkanal hinein drücken kann, sofern sich die beiden Gelenkteile im Betrieb in axialer Richtung geringfügig voneinander weg bewegen. Da es sich bei der ersten und bei der zweiten Dichtung zweckmäßig um O-Ring-Dichtungen handelt, besitzen die Anlageflächen vorzugsweise eine gerundete Form.

In der Regel ist von den beiden in Bezug zueinander drehbaren Gelenkteilen eines stationär und das andere um die Drehachse drehbar. In einem solchen Fall verläuft der Druckluftkanal zur Beaufschlagung der zweiten Dichtung mit Druckluft vorteilhaft durch den stationären Gelenkteil, was die Herstellung einer Verbindung mit der Druckluftquelle erleichtert. Die Muffe ist in einem solchen Fall bevorzugt ebenfalls am stationären Gelenkteil montiert, so dass die mindestens eine Öffnung in der Muffe im Betrieb des Drehgelenks immer nach unten gerichtet bleibt und ihre Ausrichtung nicht verändert. Grundsätzlich ist es jedoch auch möglich, die Muffe am drehbaren Gelenkteil zu montieren und um den Umfang der Muffe herum eine Mehrzahl von Öffnungen vorzusehen, so dass immer mindestens eine Öffnung nach unten weist.

Bei dem Druckentlastungskanal ist es von geringerer Bedeutung, ob er durch den stationären Gelenkteil oder den beweglichen Gelenkteil verläuft.

Im Folgenden wird die Erfindung anhand eines in der Zeichnung dargestellten Ausführungsbeispiels näher erläutert.
Fig. 1 zeigt eine teilweise geschnittene schematische Ansicht einer erfindungsgemäßen Wanddurchführung für zwei Rohrleitungen von oben gesehen;
Fig. 2 zeigt eine Längsschnittansicht eines Drehgelenks der Wanddurchführung;
Fig. 3 zeigt eine vergrößerte Ansicht des Ausschnitts A der Fig. 2.

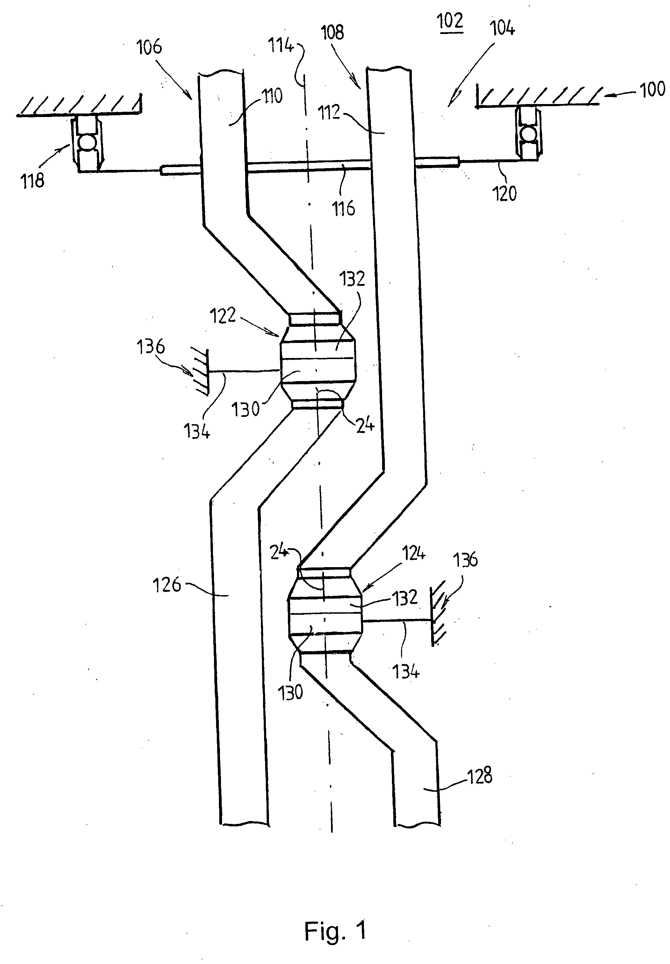

Fig. 1 zeigt eine' in einer Wand 100 eines Reinraums 102 angeordnete Wanddurchführung 104 für zwei Rohrleitungen 106, 108, durch die sterile Behandlungsfluide, wie zum Beispiel Heißdampf, Wasser und/oder Trocknungsluft, in den Reinraum 102 hinein und aus dem Reinraum 102 heraus geleitet werden können. Die Behandlungsfluide werden innerhalb des Reinraums 102 durch einen Behälter (nicht dargestellt) mit kleineren Gegenständen, wie Verschlüsse von Infusionsflaschen oder Vials für pharmazeutische Zwecke, Spritzen oder Spritzenkolben, hindurchgeführt, der lösbar an einer schwenkbaren Halterung (nicht dargestellt) befestigt ist, wie zum Beispiel in der EP 1 169 067 B1, EP 1 449 543 B1 oder der EP 2 823 828 A1 ausführlich beschrieben.

Um es innerhalb des Reinraums 102 zu ermöglichen, den Behälter in Bezug zur Wand 100 zu verschwenken, müssen zwei durch die Wand 100 hindurch geführte Abschnitte 110, 112 der beiden Rohrleitungen um dieselbe Drehachse 114 wie der Behälter schwenkbar sein. Dazu umfasst die Wanddurchführung 104 in Fig. 1 einen drehbar in der Wand 100 gelagerten plattenförmigen Körper 116, durch den sich diese beiden Rohrleitungsabschnitte 110, 112 hindurch erstrecken, wobei sie fest mit dem Körper 116 verbunden sind, so dass sie sich zusammen mit diesem um dessen Drehachse 114 drehen.

Zur drehbaren Lagerung des Körpers 116 dient ein Wälzlager 118 mit großem Durchmesser, das radial auswärts von den beiden Rohrleitungsabschnitten 110, 112 angeordnet und gekapselt ist, um eine Kontamination des Reinraums 102 aus dem geschmierten Lager 118 oder durch das Lager 118 hindurch zu verhindern. Darüber hinaus ist der Körper 116 zur Wand 100 hin mittels einer Abdichtung 120 ebenfalls abgedichtet.

Wie in Fig. 1 dargestellt, erstrecken sich die beiden geraden und in einer horizontalen Ebene nebeneinander angeordneten Rohrleitungsabschnitte 110, 112 parallel zur Drehachse 114 durch den Körper 116 hindurch, wobei ihre Längsmittelachsen jeweils denselben Abstand von der Drehachse 114 aufweisen. Die reinraumseitig über den Körper 116 überstehenden, in Fig. 1 nicht dargestellten Enden der beiden Rohrleitungsabschnitte 110, 112 sind innerhalb des Reinraums 102 mit weiteren Rohrleitungsabschnitten verbunden, die sich zu dem Behälter mit den kleineren Gegenständen erstrecken, wie in der EP 1 169 067 B1, EP 1 449 543 B1 oder der EP 2 823 828 A1 beschrieben.

Auf der vom Reinraum 102 abgewandten Seite der Wand 100 bzw. des Körpers 116 stehen die beiden zusammen mit dem Körper 116 drehbaren oder schwenkbaren Rohrleitungsabschnitte 110, 112 unterschiedlich weit über den Körper 116 über. Das Ende jedes Rohrleitungsabschnitts 110, 112 ist mittels eines Drehgelenks 122, 124 drehbar mit einem stationären Rohrleitungsabschnitt 126, 128 der zugehörigen Rohrleitung 106, 108 verbunden. Der stationäre Rohrleitungsabschnitt 126, 128 kann über Ventile oder Schieber wahlweise zum Beispiel mit einem Dampferzeuger, einer Luftquelle, einem Wasserspeicher oder einer Aufbereitungseinrichtung verbunden werden, wo die Behandlungsfluide erzeugt, zwischengespeichert oder nach ihrem Hindurchtritt durch den Behälter aufbereitet werden.

Jedes der beiden Drehgelenke 122, 124 umfasst einen stationären Gelenkteil 130 und einen in Bezug zum stationären Gelenkteil 130 drehbaren Gelenkteil 132, von denen der erstere drehfest mit dem Rohrleitungsabschnitt 126 bzw. 128 und der letztere drehfest mit dem Rohrleitungsabschnitt 110 bzw. 112 verbunden ist. Um Seitwärtsbewegungen der stationären Gelenkteile 130 zu verhindern, sind diese mit einer Stütze 134 an einer ortsfesten Unterlage 136 abgestützt.

Wie aus Fig. 1 ersichtlich ist, weisen der drehbare Körper 116 und die beiden Drehgelenke 122, 124 fluchtende Drehachsen 114, 24, 24 auf, wobei der Körper 116 und die Drehgelenke 122, 124 entlang dieser Drehachsen 114, 24, 24 im Abstand hintereinander angeordnet sind. Um jeden der beiden drehbaren Rohrleitungsabschnitte 110, 112 zu dem zugehörigen Drehgelenk 122 bzw. 124 hin zu führen, werden die Rohrleitungsabschnitte 110, 112 zwischen dem Körper 116 und dem Drehgelenk 122 bzw. 124 in Richtung der Drehachsen 114 abgelenkt. Dazu können die Rohrleitungsabschnitte 110, 112 wahlweise mit zwei Knickstellen versehen sein, wie in Fig. 1 dargestellt, oder können S-förmig gebogen sein. Die Ablenkung der beiden Rohrleitungsabschnitte 110, 112 in Richtung der Drehachsen 114 erfolgt in unterschiedlichen Abständen vom Körper 116.

Jenseits der beiden Drehgelenke 122, 124 weisen die stationären Rohrleitungsabschnitte 126, 128 parallele Längsmittelachsen auf, deren Abstand derselbe wie derjenige der Längsmittelachsen der Rohrleitungsabschnitte 110, 112 beim Hindurchtritt durch den Körper 116 ist und die zusammen mit den Drehachsen 114, 24, 24 und den Längsmittelachsen der Rohrleitungsabschnitte 110, 112 eine horizontale Ebene aufspannen. Um die stationären Rohrleitungsabschnitte 126, 128 in diesem Abstand parallel zueinander auszurichten, werden die Rohrleitungsabschnitte 126, 128 in unterschiedlichen Abständen vom Körper 116 wieder von den Drehachsen 114 weg abgelenkt. Dies kann ebenfalls wahlweise durch zwei Knickstellen erfolgen, wie in Fig. 1 dargestellt, oder durch eine S-förmige Biegung der Rohrleitungsabschnitte 126, 128.

Wie aus Fig. 1 ersichtlich ist, werden dadurch der drehbare Abschnitt 110 bzw. 112, das Drehgelenk 122 bzw. 124 und der stationäre Abschnitt 126 bzw. 128 von jeder der beiden Rohrleitungen 106 bzw. 108 auf der vom Reinraum 102 abgewandten Seite des Körpers 116 U- oder V-förmig zu den Drehachsen 114 hin ausgelenkt, wobei das Drehgelenk 122 bzw. 124 jeweils am Scheitel des U oder V angeordnet ist.

Alternativ dazu kann jedoch auch jeder der beiden stationären Rohrleitungsabschnitte 126, 128 unmittelbar hinter dem Drehgelenk 122 bzw. 124 einen Rohrbogen aufweisen, bevorzugt einen 90°-Rohrbogen, der die Rohrleitungen 106 und 108 nach unten umlenkt, um bei einem Wechsel des Behandlungsfluids die Entleerung der Rohrleitungen 106 und 108 zu erleichtern.

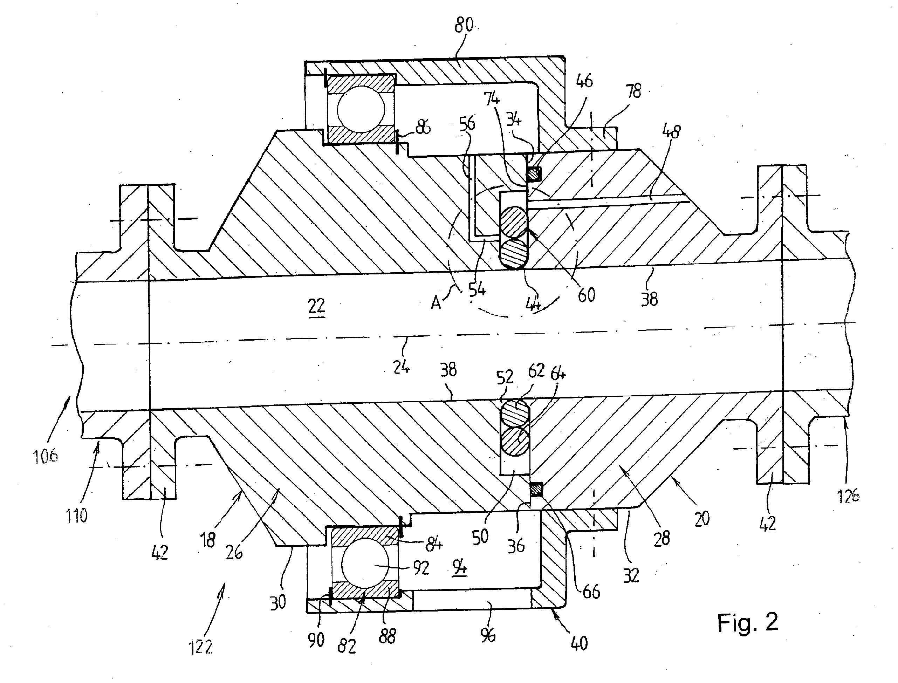

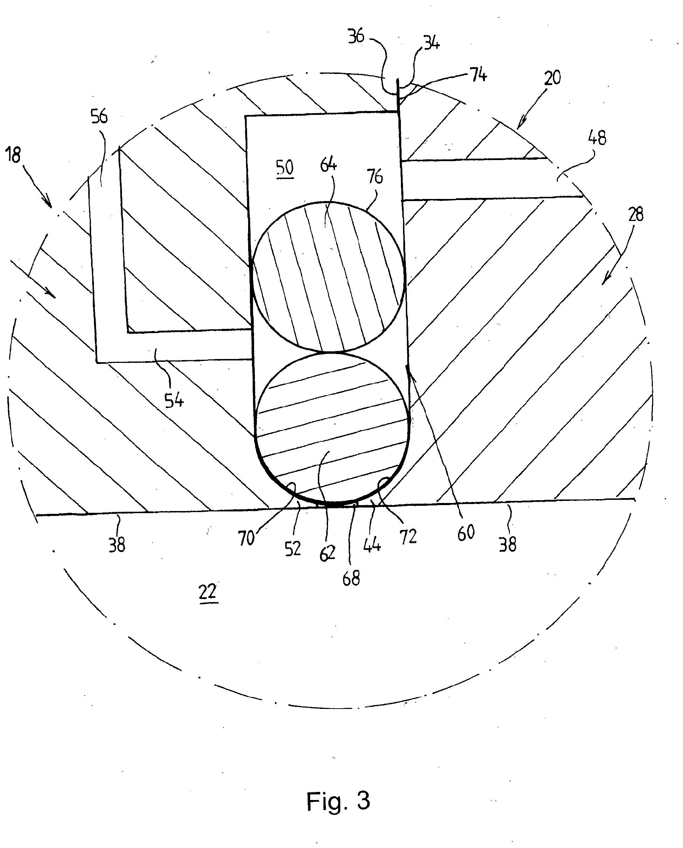

Die beiden Drehgelenke 122, 124 weisen jeweils denselben Aufbau auf, der nachfolgend unter Bezugnahme auf die Figuren 2 und 3 am Beispiel des Drehgelenks 122 beschrieben ist.

Wie am besten in Fig. 2 dargestellt, besteht das Drehgelenk 122 im Wesentlichen aus zwei miteinander verbundenen Gelenkteilen 18, 20, die jeweils lösbar und drehfest mit dem angrenzenden Abschnitt 110 bzw. 126 der Rohrleitung 106 verbindbar sind. Die beiden Gelenkteile 18, 20 umgeben einen vom Behandlungsfluid durchströmten Kanal 22 und sind in Bezug zueinander um die Drehachse 24 drehbar, die mit der Längsmittelachse des zylindrischen Fluidkanals 22 innerhalb des Drehgelenks 122 sowie mit der Drehachse 114 des Körpers 116 zusammenfällt und bei den Drehgelenken 122, 124 horizontal ausgerichtet ist.

Dadurch lässt sich das in Fig. 2 links dargestellte Gelenkteil 18 zusammen mit dem angrenzenden drehbaren Abschnitt 110 der Rohrleitung 106 in Bezug zu dem in Fig. 2 rechts dargestellten Gelenkteil 20 drehen, das zusammen mit dem angrenzenden Abschnitt 126 der Rohrleitung 106 stationär festgehalten wird. Das Gelenkteil 18 wird daher nachfolgend auch als drehbares Gelenkteil und das Gelenkteil 20 als stationäres Gelenkteil bezeichnet.

Sowohl das drehbare und das stationäre Gelenkteil 18, 20 umfassen jeweils einen durch spanabhebende Bearbeitung hergestellten einteiligen Körper 26 bzw. 28 aus nichtrostendem Stahl, der eine zur Drehachse 24 koaxiale äußere Umfangsfläche 30 bzw. 32 und eine dem anderen Gelenkteil 20, 18 zugewandte Stirnfläche 34 bzw. 36 aufweist. Beide Körper 26, 28 werden zum Fluidkanal 22 hin von fluchtenden inneren zylindrischen Umfangsflächen 38 begrenzt. Das stationäre Gelenkteil 20 umfasst neben dem Körper 28 noch eine am äußeren Umfang des Körpers 26 montierte Muffe 40 mit größerem Durchmesser, die sich ein Stück weit über das drehbare Gelenkteil 18 und die Stirnflächen 34, 36 hinweg erstreckt.

Zur Herstellung der lösbaren und drehfesten Verbindung mit dem angrenzenden Abschnitt 110 bzw. 126 der Rohrleitung 106 weist der Körper 26, 28 von jedem der beiden Gelenkteile 18, 20 an seinem zur Stirnfläche 34 bzw. 36 entgegengesetzten Ende einen Schraubflansch 42 auf, der sich fluiddicht mit einem komplementären gegenüberliegenden Schraubflansch des angrenzenden Abschnitts 110 bzw. 126 der Rohrleitung 106 verschrauben lässt.

Die zur Drehachse 24 allgemein senkrechte Stirnfläche 36 des Körpers 28 des Gelenkteils 20 ist angrenzend an den Fluidkanal 22 bzw. an die zylindrische innere Umfangsfläche 38 mit einem kleinen Vorsprung 44 und in der Nähe der äußeren Umfangsfläche 32 mit einer umlaufenden Nut 46 versehen. Der Körper 28 umgibt eine zur Drehachse parallele durchgehende Längsbohrung 48, deren eines Ende radial einwärts von der Nut 46 an seiner Stirnfläche 36 mündet. Das andere Ende der Bohrung 48 ist über ein Ventil mit einer Druckluftquelle (nicht dargestellt) verbunden, aus der Druckluft in die Bohrung 48 zugeführt werden kann.

Die gegenüberliegende Stirnfläche 34 des Körpers 26 des Gelenkteils 18 ist mit einer umlaufenden Aussparung 50 versehen, die sich radial einwärts bis die Nähe des Fluidkanals 22 bzw. der inneren Umfangsfläche 38 erstreckt und dort von einem dem Vorsprung 44 in axiale Richtung gegenüberliegenden Vorsprung 52 begrenzt wird. Der Körper 26 umgibt eine zur Drehachse 24 parallele, in die Aussparung 50 mündende Sacklochbohrung 54, die mit einer an der äußeren Umfangsfläche 30 des Körpers 26 mündenden radialen Bohrung 56 kommuniziert. Alternativ könnte auch eine in die Aussparung 50 mündende, den Körper 26 durchsetzende schräge Bohrung vorgesehen sein.

Die gegenüberliegenden Stirnflächen 34, 36 der Gelenkteile 18, 20 begrenzen einen um die Drehachse 24 umlaufenden Ringspalt 60, in dem insgesamt drei Dichtungen 62, 64, 66 angeordnet sind. Der Ringspalt 60 umfasst einen ersten innersten Abschnitt 68, der mit dem Inneren des Fluidkanals 22 kommuniziert. Die radiale Länge und die axiale Weite dieses Abschnitts 68 sind möglichst klein, so dass dort keine Strömungstoträume gebildet werden. An den innersten Abschnitt 68 schließt sich ein zweiter erweiterter Abschnitt an, der von der umlaufenden Aussparung 50 gebildet wird. Wie am besten in Fig. 3 dargestellt, weist der erweiterte Abschnitt bzw. die Aussparung 50 zum Fluidkanal 22 hin zwei gerundete Begrenzungsflächen 70, 72 auf, die von den vom Fluidkanal 22 abgewandten äußeren Oberflächen der beiden Vorsprünge 52, 44 gebildet werden. Die Begrenzungsflächen 70, 72 besitzen beide dieselbe Größe und denselben Krümmungsradius. Der erste Abschnitt 68 des Ringspalts 60 mündet in der Mitte zwischen den Begrenzungsflächen 70, 72 in die Aussparung 50. Radial auswärts von den gerundeten Begrenzungsflächen 70, 72 wird die Aussparung 50 von zwei gegenüberliegenden parallelen radialen Oberflächen begrenzt, die einen Teil der ebenen Stirnflächen 34, 36 des ersten bzw. zweiten Gelenkteils 18, 20 bilden. Zwischen der Aussparung 50 und zwei fluchtenden Abschnitten der äußeren Umfangsflächen 30, 32 der Körper 26, 28 befindet sich ein dritter Abschnitt 74 des Ringspalts 60, wo sich die ebenen Stirnflächen 34, 36 in einem geringen Abstand gegenüberliegen. In diesem Teil des Ringspalts 60 befindet sich die Nut 46 mit der Dichtung 66.

Bei allen drei Dichtungen 62, 64, 66 handelt es sich um O-Ring-Dichtungen mit einem kreisförmigen Querschnitt, die besonders preiswert sind. Die zum Fluidkanal 22 benachbarten inneren Dichtungen 62, 64 sind beide in der Aussparung 50 angeordnet und besitzen beide denselben Querschnitt. Der Durchmesser der äußeren O-Ring-Dichtung 64 ist um diesen Querschnitt größer als der Durchmesser der inneren O-Ring-Dichtung 62, so dass die Dichtungen 62, 64 in radialer Richtung der Drehachse 24 unmittelbar übereinander in der Aussparung 50 angeordnet sind und gegeneinander anliegen. Die dritte äußere Dichtung 66 hat einen kleineren Querschnitt.

Die mit der Druckluftquelle kommunizierende Längsbohrung 48 mündet radial auswärts von der zweiten Dichtung 64 in die Aussparung 50, so dass die Mündung der Bohrung 48 zwischen den Dichtungen 64, 66 angeordnet ist. Demgegenüber mündet die Bohrung 54 zwischen den beiden Dichtungen 62, 64 in die Aussparung 50. Nach der Montage des Drehgelenks 122 weisen die gegenüberliegenden Stirnflächen 34, 36 im Bereich der Aussparung 50 einen Abstand auf, der etwas kleiner als der Querschnitt der Dichtungen 62, 64 ist, so dass diese gegen die beiden gegenüberliegenden Stirnflächen 34, 36 anliegen.

Der Krümmungsradius der kreisförmigen Umfangsflächen 76 der Dichtungen 62, 64 entspricht dem Krümmungsradius der gekrümmten Begrenzungsflächen 70, 72 der Aussparung 50, so dass die erste Dichtung 62 nahezu mit der Hälfte ihrer Umfangsfläche 76 gegen die gekrümmten Begrenzungsflächen 70, 72 anliegt, wie am besten in Fig. 3 dargestellt.

Die im Kontakt mit dem Fluid befindliche Dichtung 62 dient im Zusammenwirken mit der Dichtung 64 dazu, den in den Fluidkanal 22 mündenden radial innersten Abschnitt 68 des Ringspalts 60 nach außen und innen abzudichten, um einerseits ein Entweichen von Behandlungsfluid aus dem Fluidkanal 22 und andererseits eine Kontamination des sterilem Fluids im Fluidkanal 22 zu verhindern. Zu diesem Zweck wird durch die Bohrung 48 aus der Druckluftquelle Druckluft in die Aussparung 50 zugeführt. Die zugeführte Druckluft drückt die Dichtung 64 von außen her gegen die Dichtung 62, so dass diese wiederum gegen die gerundeten Begrenzungsflächen 70, 72 angepresst wird. Außerdem werden die beiden Dichtungen 62, 64 von der Druckluft in radialer Richtung etwas zusammengedrückt und dadurch in axialer Richtung gegen die gegenüberliegenden ebenen Begrenzungsflächen der Aussparung 50 angepresst.

Die Bohrungen 54, 56 dienen als Druckentlastungskanal, durch den eventuell an der Dichtung 64 vorbeitretende Druckluft aus der Aussparung 50 heraus in die Umgebung abgeleitet werden kann, so dass sich im Zwischenraum zwischen den Dichtungen 62, 64 kein Druck aufbauen kann.

Die Muffe 40 weist einen verengten Abschnitt 78 und einen erweiterten Abschnitt 80 auf. Der Abschnitt 78 lässt sich mit Gleitpassung über die äußere Umfangsfläche 32 des Körpers 20 des stationären Gelenkteils 20 schieben und mit mehreren radialen Befestigungsschrauben am Körper 20 befestigen. Der Abschnitt 80 weist in Richtung des drehbaren Gelenkteils 18 und besitzt eine zur Drehachse 24 koaxiale innere Umfangsfläche.

Zwischen den beiden Gelenkteilen 18, 20 ist ein zur Drehachse 24 koaxiales Drehlager 82 angeordnet. Bei dem Drehlager 82 handelt es sich um ein geschmiertes Wälzlager in Form eines Rillenkugellagers. Das Rillenkugellager 82 besitzt einen Innenring 84, der von einem Sicherungsring 86 auf einer Stufe der äußeren Umfangsfläche 30 des drehbaren Gelenkteils 18 festgehalten wird, einen Außenring 88, der von einem Sicherungsring 90 auf einer Stufe der inneren Umfangsfläche der Muffe 40 gehalten wird, sowie einen Käfig (nicht dargestellt) mit mehreren kugelförmigen Wälzkörpern 92.

Obwohl das Rillenkugellager 82 vorzugsweise gekapselt ist, kann ein Austritt von Schmiermittel aus dem Lager 82 nicht immer mit Sicherheit verhindert werden. Jedoch muss stets mit Sicherheit verhindert werden, dass ggf. austretendes Schmiermittel in das durch das Drehgelenk 122 bzw. durch den Fluidkanal 22 strömende sterile Behandlungsfluid gelangen kann.

Dies wird dadurch erreicht, dass zwischen der Muffe 40 und den äußeren Umfangsflächen 30, 32 der beiden Körper 26, 28 ein Raum 94 angeordnet ist, der nach unten zu durch eine schlitzförmige Öffnung 96 in der stationäre Muffe 40 mit der Umgebung kommuniziert. Auf diese Weise kann auf der Seite des Raums 94 eventuell aus dem Lager 82 austretendes Schmiermittel zuerst an der Umfangsfläche 30 des Körpers 26 entlang nach unten fließen, wo es dann durch die Öffnung 96 nach unten vom Drehgelenk 122 abtropfen kann. Auf keinen Fall kann das Schmiermittel bis zum Ringspalt 60 oder gar bis in den Ringspalt 60 bzw. in die Aussparung 50 hinein vordringen.

## Patentansprüche

1. Wanddurchführung (104) für zwei Rohrleitungen (106, 108), mit einem um eine Drehachse (114) drehbar in einer Wand (100) gelagerten Körper (116), durch den sich zwei nebeneinander angeordnete und zusammen mit dem Körper (116) drehbare Abschnitte (110, 112) der beiden Rohrleitungen (106, 108) erstrecken, die jeweils mit einem stationären Abschnitt (126, 128) von einer der beiden Rohrleitungen (106, 108) kommunizieren, **dadurch gekennzeichnet, dass** jeder der beiden drehbaren Abschnitte (110, 112) durch ein Drehgelenk (122, 124) mit einem der beiden stationären Abschnitte (126, 128) verbunden ist und dass die Drehachse (114) des Körpers (116) und die Drehachsen (24) der beiden Drehgelenke (122, 124) miteinander fluchten.

2. Wanddurchführung (104) nach Anspruch 1, **dadurch gekennzeichnet, dass** die beiden Drehgelenke (122, 124) und der Körper (116) entlang der fluchtenden Drehachsen (114, 24) im Abstand hintereinander angeordnet sind.

3. Wanddurchführung (104) nach Anspruch 1 oder 2, **dadurch gekennzeichnet, dass** die drehbaren Abschnitte (110, 112) der beiden Rohrleitungen (106, 108) in unterschiedlichen Abständen vom Körper (116) zu den Drehachsen (114, 24) hin abgelenkt sind.

4. Wanddurchführung (104) nach einem der Ansprüche 1 bis 3, **dadurch gekennzeichnet, dass** die stationären Abschnitte (126, 128) der beiden Rohrleitungen (106, 108) in unterschiedlichen Abständen vom Körper (116) von den Drehachsen (114, 24) weg abgelenkt sind.

5. Wanddurchführung (104) nach einem der Ansprüche 1 bis 4, **dadurch gekennzeichnet, dass** der drehbare Abschnitt (110, 112), das Drehgelenk (122, 124) und der stationäre Abschnitt (126, 128) von jeder der beiden Rohrleitungen (106, 108) U- oder V-förmig zu den Drehachsen (114, 24) hin ausgelenkt ist, wobei die Drehgelenke (122, 124) an den Scheiteln des U oder V angeordnet sind.

6. Wanddurchführung (104) nach einem der Ansprüche 1 bis 5, **dadurch gekennzeichnet, dass** jedes der beiden Drehgelenke (122, 124) ein stationäres Gelenkteil (130; 20) und ein drehbares Gelenkteil (132; 18) umfasst und dass die beiden stationären Gelenkteile (132) durch Stützen (134) abgestützt sind.

7. Wanddurchführung (104) nach einem der Ansprüche 1 bis 6, **dadurch gekennzeichnet, dass** zwischen dem Körper (116) und der Wand (100) eine Abdichtung (120) und ein gekapseltes Lager (118) angeordnet sind.

8. Wanddurchführung (104) nach einem der vorangehenden Ansprüche, **dadurch gekennzeichnet, dass** das Drehgelenk (122, 124) zwei Gelenkteile (18, 20; 130, 132) umfasst, die einen Fluidkanal (22) umgeben und in Bezug zueinander um eine Drehachse (24) drehbar sind, eine in einem Ringspalt (60) zwischen den beiden Gelenkteilen (18, 20) angeordnete, gegen die beiden Gelenkteile (18, 20) anliegende und im Kontakt mit dem Fluid befindliche Dichtung (62), sowie ein zwischen den beiden Gelenkteilen (18, 20) angeordnetes, zur Drehachse (24) koaxiales Drehlager (82), wobei zwischen der Dichtung (62) und dem Drehlager (82) ein zur Umgebung hin offener Raum (94) angeordnet ist.

9. Wanddurchführung (104) nach Anspruch 8, **dadurch gekennzeichnet, dass** der offene Raum (94) zwischen dem Ringspalt (60) und dem Drehlager (82) angeordnet ist.

10. Wanddurchführung (104) nach Anspruch 8 oder 9, **dadurch gekennzeichnet, dass** die Drehachse (24) allgemein horizontal ausgerichtet ist und dass der Raum (94) nach unten zu offen ist.

11. Wanddurchführung (104) nach einem der Ansprüche 8 bis 10, **dadurch gekennzeichnet, dass** der Ringspalt (60) zwischen zwei axial gegenüberliegenden Stirnflächen (34, 36) der beiden Gelenkteile (18, 20) und der zur Umgebung hin offene Raum (94) zwischen zwei radial gegenüberliegenden Umfangsflächen des Drehgelenks (1122, 124) angeordnet ist, wobei der Ringspalt (60) an den Fluidkanal (22) angrenzt, während der zur Umgebung hin offene Raum (94) an das Drehlager (82) angrenzt.

12. Wanddurchführung (104) nach einem der Ansprüche 8 bis 11, **dadurch gekennzeichnet, dass** ein mit einer Druckluftquelle verbundener oder verbindbarer Druckluftkanal (48) zwischen der Dichtung (62) und dem Raum (94) in den Ringspalt (60) mündet und dass zwischen der Mündung des Druckluftkanals (48) und der Dichtung (62) eine zweite Dichtung (64) angeordnet ist, die von der Druckluft gegen die Dichtung (62) angepresst wird.

13. Wanddurchführung (104) nach einem der Ansprüche 8 bis 12, **dadurch gekennzeichnet, dass** an einem (20) der beiden Gelenkteile (18, 20) eine das andere Gelenkteil (18) übergreifende Muffe (40) angebracht ist, dass ein Außenring (88) des Drehlagers (82) gegen eine innere Umfangsfläche der Muffe (40) anliegt und dass ein Innenring (84) des Drehlagers (82) gegen eine Umfangsfläche (30) des anderen Gelenkteils (18) anliegt.

14. Wanddurchführung (104) nach Anspruch 13, **dadurch gekennzeichnet, dass** die Muffe (40) am stationären Gelenkteil (20) angebracht ist.

15. Wanddurchführung (104) nach einem der Ansprüche 12 bis 14, **dadurch gekennzeichnet, dass** der Druckluftkanal (48) durch das stationäre Gelenkteil (20) verläuft.

## Claims

1. Wall feed-through system (104) for two conduits (106, 108), having a body (116) which is mounted in a wall (100) for rotation about an axis of rotation (114) and through which extend two portions (110,112) of the two conduits (106, 108), said two portions being arranged one beside the other, being rotatable together with the body (116) and each communicating with a stationary portion (126, 128) of one of the two conduits (106, 108), **characterized in that** each of the two rotatable portions (110, 112) is connected to one of the two stationary portions (126, 128) by a rotary joint (122, 124), and **in that** the axis of rotation (114) of the body (116) and the axes of rotation (24) of the two rotary joints (122, 124) are in alignment with one another.

2. Wall feed-through system (104) according to Claim 1, **characterized in that** the two rotary joints (122, 124) and the body (116) are arranged at a distance one behind the other along the aligned axes of rotation (114, 24).

3. Wall feed-through system (104) according to Claim 1 or 2, **characterized in that** the rotatable portions (110, 112) of the two conduits (106, 108) are deflected in the direction of the axes of rotation (114, 24) at different distances from the body (116).

4. Wall feed-through system (104) according to one of Claims 1 to 3, **characterized in that** the stationary portions (126, 128) of the two conduits (106, 108) are deflected away from the axes of rotation (114, 24) at different distances from the body (116).

5. Wall feed-through system (104) according to one of Claims 1 to 4, **characterized in that** the rotatable portion (110, 112), the rotary joint (122, 124) and the stationary portion (126, 128) of each of the two conduits (106, 108) are deflected in a U-shaped or V-shaped manner in the direction of the axes of rotation (114, 24), wherein the rotary joints (122, 124) are arranged at the vertices of the U or V.

6. Wall feed-through system (104) according to one of Claims 1 to 5, **characterized in that** each of the two rotary joints (122, 124) comprises a stationary joint part (130; 20) and a rotatable joint part (132; 18), and **in that** the two stationary joint parts (132) are supported by supports (134).

7. Wall feed-through system (104) according to one of Claims 1 to 6, **characterized in that** a sealing means (120) and an encapsulated bearing (118) are arranged between the body (116) and the wall (100) .

8. Wall feed-through system (104) according to one of the preceding claims, **characterized in that** the rotary joint (122, 124) comprises two joint parts (18, 20; 130, 132) which enclose a fluid channel (22) and can be rotated in relation to one another about an axis of rotation (24), also comprises a seal (62) which is arranged in an annular gap (60) between the two joint parts (18, 20), butts against the two joint parts (18, 20) and is in contact with the fluid, and further comprises a rotary bearing (82), which is arranged between the two joint parts (18, 20) and is coaxial with the axis of rotation (24), wherein a space (94) which is open towards the surroundings is arranged between the seal (62) and the rotary bearing (82).

9. Wall feed-through system (104) according to Claim 8, **characterized in that** the open space (94) is arranged between the annular gap (60) and the rotary bearing (82).

10. Wall feed-through system (104) according to Claim 8 or 9, **characterized in that** the axis of rotation (24) is oriented in a generally horizontal manner, and **in that** the space (94) is open in the downward direction.

11. Wall feed-through system (104) according to one of Claims 8 to 10, **characterized in that** the annular gap (60) is arranged between two axially opposite end surfaces (34, 36) of the two joint parts (18, 20), and the space (94), which is open towards the surroundings, is arranged between two radially opposite circumferential surfaces of the rotary joint (1122, 124), wherein the annular gap (60) is adjacent to the fluid channel (22), whereas the space (94), which is open towards the surroundings, is adjacent to the rotary bearing (82) .

12. Wall feed-through system (104) according to one of Claims 8 to 11, **characterized in that** a compressed-air channel (48), which is or can be connected to a compressed-air source, opens out into the annular gap (60) between the seal (62) and the space (94), and **in that** a second seal (64) is arranged between the mouth opening of the compressed-air channel (48) and the seal (62), said second seal being pressed against the seal (62) by the compressed air.

13. Wall feed-through system (104) according to one of Claims 8 to 12, **characterized in that** one (20) of the two joint parts (18, 20) has fitted on it a sleeve (40), which engages over the other joint part (18), **in that** an outer race (88) of the rotary bearing (82) butts against an inner circumferential surface of the sleeve (40), and **in that** an inner race (84) of the rotary bearing (82) butts against a circumferential surface (30) of the other joint part (18).

14. Wall feed-through system (104) according to Claim 13, **characterized in that** the sleeve (40) is fitted on the stationary joint part (20).

15. Wall feed-through system (104) according to one of Claims 12 to 14, **characterized in that** the compressed-air channel (48) runs through the stationary joint part (20).

## Revendications

1. Traversée de paroi (104) destinée à deux canalisations (106, 108) et comprenant un corps (116) qui est monté dans une paroi (100) de manière à pouvoir tourner sur un axe de rotation (114) et à travers lequel s'étendent deux portions (110, 112), adjacentes et pouvant tourner conjointement avec le corps (116), des deux canalisations (106, 108), lesquelles portions communiquent chacune avec une portion fixe (126, 128) de l'une des deux canalisations (106, 108), **caractérisée en ce que** chacune des deux parties portions tournantes (110, 112) est reliée à l'une des deux portions fixes (126, 128) par une articulation tournante (122, 124) et **en ce que** l'axe de rotation (114) du corps (116) et les axes de rotation (24) des deux articulations tournantes (122, 124) sont alignés entre eux.

2. Traversée de paroi (104) selon la revendication 1, **caractérisée en ce que** les deux articulations tournantes (122, 124) et le corps (116) sont disposés à distance les uns derrière les autres le long des axes de rotation (114, 24) alignés.

3. Traversée de paroi (104) selon la revendication 1 ou 2, **caractérisée en ce que** les portions tournantes (110, 112) des deux canalisations (106, 108) sont déviées en direction des axes de rotation (114, 24) à des distances différentes du corps (116).

4. Traversée de paroi (104) selon l'une des revendications 1 à 3, **caractérisée en ce que** les portions fixes (126, 128) des deux canalisations (106, 108) sont déviées des axes de rotation (114, 24) à des distances différentes du corps (116).

5. Traversée de paroi (104) selon l'une des revendications 1 à 4, **caractérisée en ce que** la portion tournante (110, 112), l'articulation tournante (122, 124) et la portion fixe (126, 128) de chacune des deux canalisations (106, 108) est déviée en forme de U ou de V en direction des axes de rotation (114, 24), les articulations tournantes (122, 124) étant disposées aux sommets du U ou du V.

6. Traversée de paroi (104) selon l'une des revendications 1 à 5, **caractérisée en ce que** chacune des deux articulations tournantes (122, 124) comprend une partie fixe (130 ; 20) et une partie tournante (132 ; 18) et **en ce que** les deux parties (132) sont supportées par des supports (134).

7. Traversée de paroi (104) selon l'une des revendications 1 à 6, **caractérisée en ce qu'**une garniture d'étanchéité (120) et un palier encapsulé (118) sont disposés entre le corps (116) et la paroi (100) .

8. Traversée de paroi (104) selon l'une des revendications précédentes, **caractérisée en ce que** l'articulation tournante (122, 124) comprend deux parties (18, 20 ; 130, 132) qui entourent un conduit de fluide (22) et qui peuvent tourner l'une par rapport à l'autre sur un axe de rotation (24), une garniture d'étanchéité (62) qui est disposée dans un espace annulaire (60) ménagé entre les deux parties (18, 20), qui est appliquée contre les deux parties (18, 20) et qui se trouve en contact avec le fluide, ainsi qu'un palier tournant (82) disposé entre deux parties (18, 20) et coaxial à l'axe de rotation (24), un espace (94) ouvert vers l'environnement étant ménagé entre la garniture (62) et le palier tournant (82).

9. Traversée de paroi (104) selon la revendication 8, **caractérisée en ce que** l'espace ouvert (94) est ménagé entre l'espace annulaire (60) et le palier tournant (82) .

10. Traversée de paroi (104) selon la revendication 8 ou 9, **caractérisée en ce que** l'axe de rotation (24) est orienté d'une manière générale horizontalement et **en ce que** l'espace (94) est ouvert vers le bas.

11. Traversée de paroi (104) selon l'une des revendications 8 à 10, **caractérisée en ce que** l'espace annulaire (60) est ménagé entre deux faces d'extrémité (34, 36) axialement opposées des deux parties (18, 20) et l'espace (94) ouvert vers l'environnement est ménagé entre deux faces circonférentielles radialement opposées de l'articulation tournante (1122, 124), l'espace annulaire (60) étant adjacent au conduit de fluide (22) tandis que l'espace (94) ouvert vers l'environnement est adjacent au palier tournant (82).

12. Traversée de paroi (104) selon l'une des revendications 8 à 11, **caractérisée en ce qu'**un conduit d'air sous pression (48) relié ou pouvant être relié à une source d'air comprimé débouche dans l'espace annulaire (60) ménagé entre la garniture d'étanchéité (62) et l'espace (94) et **en ce qu'**une deuxième garniture d'étanchéité (64), qui est pressée par l'air comprimé contre la garniture d'étanchéité (62), est disposée entre l'embouchure du conduit d'air comprimé (48) et la garniture d'étanchéité (62).

13. Traversée de paroi (104) selon l'une des revendications 8 à 12, **caractérisée en ce qu'**un manchon (40) est monté sur l'une (20) des deux parties (18, 20) et s'engage par-dessus l'autre partie (18), **en ce qu'**une bague extérieure (88) du palier tournant (82) vient en appui contre une surface circonférentielle intérieure du manchon (40) et **en ce qu'**une bague intérieure (84) du palier tournant (82) vient en appui contre une surface circonférentielle (30) de l'autre partie (18).

14. Traversée de paroi (104) selon la revendication 13, **caractérisée en ce que** le manchon (40) est monté sur la partie fixe (20).

15. Traversée de paroi (104) selon l'une des revendications 12 à 14, **caractérisée en ce que** le conduit d'air comprimé (48) traverse la partie de joint fixe (20).
